# EUROPÄISCHE PATENTANMELDUNG

(11) **EP 1 071 191 A1**
(43) Veröffentlichungstag der Anmeldung: **24.01.2001**
(21) Anmeldenummer: 00108637.0
(22) Anmeldetag: 20.04.2000
(51) Int. Cl.: H02K 11/02

(54) **Glockenankermotor mit einer Funkenunterdrückungseinrichtung**

(30) Priorität: 23.07.1999 DE 19934685
(71) Anmelder: INTERELECTRIC AG, CH-6072 Sachseln (CH)
(72) Erfinder: Wiese, Hinrich, 6340 Baar (CH)
(74) Vertreter: Grünecker, Kinkeldey, Stockmair & Schwanhäusser Anwaltssozietät

(57) **Zusammenfassung**

Die Erfindung betrifft einen Glockenankermotor mit einem Kommutator und mehreren diskreten mit dem Kommutator elektrisch verbundenen Kondensatorselementen als Funkenunterdrückungseinrichtung. Die Funkenunterdrückung soll insbesondere verbessert werden. Hierzu ist der eine Kontaktanschluss (11) eines Kondensatorelements (12) mit jeweils einem der Kontaktanschlüsse (11) der anderen Kondensatorelemente (12) zu einem Sternpunkt (13) elektrisch zusammengeschaltet und der andere Kontaktanschluss (10) der Kondensatorelemente (12) jeweils mit einer zugeordneten Kommutatorlamelle (6) elektrisch verbunden, wobei die Funkenunterdrückungseinrichtung mindestens einen ersten Anschlusskreis und mindestens einen zweiten, im Wesentlichen koaxial zum ersten Anschlusskreis angeordneten Anschlusskreis mit größerem Durchmesser umfasst, der eine Anschlusskreis aus miteinander elektrisch zusammengeschalteten, den Sternpunkt bildenden Anschlussflächen und der andere Anschlusskreis aus elektrisch voneinander isolierten, mit einer zugeordneten Kommutatorlamelle (6) in elektrischer Verbindung stehenden Anschlussflächen (21) gebildet ist und sich die Kondensatorelemente (12) wie die Speichen eines Rades jeweils zwischen einer Anschlussfläche (21,23) des ersten Anschlusskreises und einer Anschlussfläche (21,23) des zweiten Anschlusskreises erstrecken und die Kontaktanschlüsse (10,11) mit der jeweils zugeordneten Anschlussfläche (21,23) elektrisch verbunden sind.

## Beschreibung

Die vorliegende Erfindung betrifft einen Glockenankermotor mit einem Kommutator und einer Funkenunterdrückungseinrichtung aus mehreren, diskreten mit dem Kommutator elektrisch verbundenen Kondensatorelementen, die einen ersten Kontaktanschluss und einen zweiten Kontaktanschluss aufweisen.

Glockenankermotoren weisen aufgrund ihres eisenlosen Läufers ein relativ kleines Trägheitsmoment auf, wodurch sie ein für viele Anwendungsfälle günstiges Verhalten aufweisen. In aller Regel dreht sich der Spulenkörper des Rotors in einem Luftspalt zwischen einem zylindrischen Permanentmagneten und einer magnetischen Rückschlusshülse aus Eisen. Die Anzahl der Wicklungen ist aufgrund dieses Aufbaus nicht so stark beschränkt, wie bei kleinen Gleichstromelektromotoren mit geblechtem Läuferpaket. Bei kleinen Gleichstrommotoren finden sich daher in aller Regel nur drei Spulen auf einem Läufer, damit der Eisenkern nicht zu sehr geschwächt wird.

Die Stromzuführung erfolgt bei diesen Gleichstromelektromotoren mittels elektrischer, mechanisch schaltender Kontakte, weshalb aufgrund der Stromwendung oder Kommutierung das Problem einer Funkenbildung auftritt. Häufig werden zur Kommutierung Kohlebürsten verwendet, die auf eine Kollektorhülse aufdrücken. Die Kollektorhülse ist aus achsparallel zueinander verlaufenden Lamellenabschnitten gebildet, die voneinander isoliert sind. Die Haltbarkeit dieser Kontakte wird durch Überschlag von elektrischen Ladungen in Form von Funkenbildung stark herabgesetzt.

Im Stand der Technik sind bereits Glockenankermotoren bekannt, die z.B. eine Kondensatorscheibe aus einer speziellen Keramik (CCL-Scheibe) verwenden. Die Kondensatorscheibe nimmt einen Teil der Ladungsmenge auf und unterdrückt die Funkenbildung. Allerdings weisen diese keramischen Scheiben eine erhöhte Bruchgefahr auf und sind zudem in der Bemessung von frequenzabhängigen Ersatzseriewiderständen und Kapazitäten größerer Fertigungsstreuung unterworfen. Des Weiteren konnten bislang keine keramischen Scheiben mit ausreichend hohen Kapazitäten bereitgestellt werden. Es sind auch bereits Schaltungsanordnungen zumindest zu Versuchszwecken eingesetzt worden, bei denen auf einer Trägerscheibe mehrere diskrete kapazitive Bauelemente angeordnet sind, die jeweils parallel zu zwei Lamellen geschaltet sind. Das bedeutet, dass das eine Ende des Kondensators mit der einen Lamelle und das andere Ende des Kondensators mit der Nachbarlamelle elektrisch verbunden ist. Mit einer solchen Schaltung lassen sich zwar bereits höhere Kapazitäten realisieren; jedoch besteht auch hier Verbesserungsbedarf.

Es ist daher die Aufgabe der vorliegenden Erfindung, einen Glockenankermotor der eingangs genannten Art derart zu verbessern, dass eine günstige Funkenunterdrückungseinrichtung bereitgestellt ist.

Diese Aufgabe wird erfindungsgemäß dadurch gelöst, dass der eine Kontaktanschluss eines Kondensatorelementes mit jeweils einem der Kontaktanschlüsse der anderen Kondensatorelemente zu einem Sternpunkt elektrisch zusammengeschaltet ist und der andere Kontaktanschluss der Kondensatorelemente jeweils mit einer zugeordneten Kommutatorlamelle elektrisch verbunden ist, wobei die Funkenunterdrückungseinrichtung mindestens einen ersten Anschlusskreis und mindestens einen zweiten, im Wesentlichen koaxial zum ersten Anschlusskreis angeordneten Anschlusskreis mit größerem Durchmesser umfasst, der eine Anschluss aus miteinander elektrisch zusammengeschalteten, den Sternpunkt bildenden Anschlussflächen und der andere Anschlusskreis aus elektrisch voneinander isolierten, mit einer zugeordneten Kommutatorlamelle in elektrischer Verbindung stehenden Anschlussflächen gebildet ist und sich die Kondensatorelemente wie die Speichen eines Rades jeweils zwischen einer Anschlussfläche des ersten Anschlusskreises und einer Anschlussfläche des zweiten Anschlusskreises erstrecken und die Kontaktanschlüsse mit der jeweils zugeordneten Anschlussfläche elektrisch verbunden sind.

Ein Vorteil der Erfindung liegt in der gewählten Schaltungsart (Sternschaltung) zu einem Systemverbund. Diese gestattet es, einen Großteil bei der Kommutierung auftretenden, vom Motor erzeugten Ladungsmenge aufzunehmen und dadurch eine Funkenbildung wirksam zu unterdrücken, die die Lebensdauer der Kontakte und damit des Motors einschränken würde. Dadurch, dass eine Seite der Kondensatorelemente zusammengeschaltet ist, sind an dem Verbund auch Kondensatorelemente beteiligt, die während des Betriebs in Abhängigkeit von der Drehstellung eines Rotors weniger elektrisch beaufschlagt sind und somit ein besserer Ausgleich stattfinden kann, als bei bekannten Anordnungen. Bei diesen bekannten Anordnungen sind nur jeweils nebeneinander liegende Kommutatorlamellen miteinander über ein Kondensatorelement verbunden. Versuche haben gezeigt, dass sich die erfindungsgemäße Schaltung effektiver auf die Funkenunterdrückung auswirkt.

Zwar ist eine Sternschaltung bei Funkenunterdrückungseinrichtungen bereits bekannt; jedoch wurde diese bislang nicht bei Glockenankermotoren eingesetzt. Ein Grund mag darin liegen, dass die Eigenschaften eines solchen Motors mit eisenlosem Läufer zum Teil doch erheblich abweichen von denen anderer Gleichstrommotorenbauarten.

Ergänzend kommt bei der vorliegenden Erfindung auch die konkrete Anordnungsform vorteilhaft zum Tragen, da Glockenankermotoren meist mit einer größeren Anzahl von Rotorspulen hergestellt werden. Die speichenförmige Anordnung gestattet es, sehr viele Kondensatorelemente nebeneinander anzuordnen, so dass die gewünschte Funkenunterdrückung auch bei hoher Spulenanzahl kein Problem darstellt. Die relativ kompakte Anordnung mittels der koaxialen Anschlusskreise vereinfacht auch die Auswuchtung solcher Rotoren mit Funkenunterdrückungseinrichtungen, da diese gleichmäßig um die Rotorachse mit gleichen Abschnitten platzierbar sind und sich in ihrer Lage nicht verändern.

Die Kombination dieser vorteilhaften Merkmale erweist sich gerade auf dem Gebiet der Glockenankermotoren als äußerst vorteilhaft, da die speichenförmige Anordnung der Kondensatorelemente mittels der Anschlusskreise stabilisierend auf die lediglich einseitig vorhandene Befestigung des Spulenkörpers wirkt. Hierdurch werden auch unnötige Schwingungen vermieden.

Darüber hinaus ist es äußerst vorteilhaft, wenn gemäß einer Ausführungsform sichergestellt wird, dass der Sternpunkt ausschließlich die einen Kontaktanschlüsse der Kondensatorelemente elektrisch zusammenschaltet und keine weitere elektrische Verbindung vorhanden ist. Das bedeutet, dass eine Seite der Kondensatorelemente unmittelbar mit einem der einen Seite der anderen Kondensatorelemente elektrisch verbunden ist, so dass hier ein direkter Austausch von Ladungen ohne weitere Beeinflussung stattfindet. Insbesondere soll von dieser Kontaktseite kein Spulenanschluss wegführen.

Der erfindungsgemäße Effekt verstärkt seine Wirkung insbesondere bei Ausführungsformen dadurch, dass deren Anzahl der Kondensatorelemente größer als 3, bevorzugt größer als 5, beträgt. Die Positionierung und radförmige Struktur erlaubt es eine Vielzahl solcher Kondensatorelemente z.B. auf einem einzigen Träger zu platzieren.

In einer einfach zu fertigenden Ausführungsform können die Kondensatorelemente radial zum Mittelpunkt der beiden Anschlusskreise angeordnet sein.

Bevorzugt können die Kondensatorelemente als blockförmige Kippkondensatoren, bevorzugt aus Keramik, ausgebildet sein. Solche Kondensatorelemente werden auch als Multilayer-(Keramik-)Kondensatoren bezeichnet. Sie sind in aller Regel quaderförmig ausgestaltet, wobei die Breite größer als die Höhe und die Länge größer als die Breite ist. An den beiden Stirnenden befindet sich dann jeweils ein Anschluss.

Darüber hinaus kann der Widerstand der Kondensatorelemente frequenzabhängig sein und mit steigender Frequenz abnehmen. Hierdurch kann die Ladungsmenge schneller aufgenommen werden, was sich im Hinblick auf höhere Frequenzen vorteilhaft auswirkt.

Der zweite elektrische Kontaktanschluss der Kondensatorelemente kann mit einer Kommutatorlamelle elektrisch verbunden sein. Hierdurch vereinfacht sich die Schaltung und eine genaue Zuordnung und einfachere Vorherbestimmung ist gegeben.

Eine herstellungstechnisch sowie aus Platzspargründen sehr vorteilhafte Ausführungsform besteht darin, dass eine Trägerscheibe vorgesehen ist, auf der mittels SMD-Technik die diskreten Kondensatorelemente aufgebracht sind. Die Verwendung diskreter Kondensatorelemente lässt eine unzählige Vielfalt an Anordnungmöglichkeiten zu, die den unterschiedlichsten Anzahlen der einzelnen Wicklungen sowie der Größenordnungen der Funkenunterdrückungseinrichtungen Rechnung tragen kann. Insbesondere ist es möglich, die Trägerscheibe nicht größer als der Außendurchmesser des Rotors auszugestalten, so dass kleine Baugrößen beibehaltbar sind.

Bevorzugt kann die Trägerscheibe aus Leiterplattenmaterial bestehen, auf dem die Anschlusskreise und die Anschlussflächen für die Kondensatorelemente und/oder Kommutatorlamellen angeordnet sind. Eine solche Trägerscheibe kann mit geringer Dicke hergestellt werden, so dass die resultierende Bauhöhe gering haltbar ist. Des Weiteren ist die Anordnung hinreichend flexibel gestaltet, so dass es bei geringen Verformungen, die während der Montage oder auch während thermischer Belastung des Motors auftreten können, nicht zu Brüchen oder ähnlichen Beschädigungen kommt. Die Anzahl der sternförmig zusammengeschalteten Grundelemente entspricht zweckmäßig der Anzahl der Motorteilwicklungssysteme bzw. der Anzahl der Lamellen eines Kommutatorsystems. Konstruktiv bedingt kann es sich jedoch als Vorteil erweisen, wenn die Anzahl der zusammengeschalteten Grundelemente geringer ist als die Anzahl der Lamellen des Kommutatorsystems. Hierdurch lassen sich extrem kleine Motoren mit ausreichender Funkenunterdrückung konstruieren.

Insbesondere bei der Verwendung von Elektrokleinmotoren mit eisenlosem Läufer können die Kondensatorelemente bipolar nutzbare Kondensatoren mit Kapazitätswerten von 1 bis 1000 Nanofarad sein. Die Kapazität ist dabei so zu wählen, das jeweils eine effektive Funkenlöschung in Abhängigkeit des Motorwicklungsaufbaus erfolgt.

Ergänzend sei erwähnt, dass ein Elektromotor schaltungstechnisch im Wesentlichen als ein Verbund von Induktivitäten, Widerständen und Drehzahl- und induktivitätsabhängigen Spannungsquellen dargestellt werden kann. Mit der zusätzlichen Anordnung von speziell zusammengeschalteten, ortsfest angeordneten Kondensatoren mit z.B. speziellen frequenzabhängigen Eigenschaften wird die vom Motor während des Kommutierungsvorgangs erzeugte elektrische Energie im Idealfall in den Kondensatoren zunächst aufgenommen und dann nach den Mechanismen einer gedämpften elektrischen Schwingung mittels der ohmschen Widerstände des Systems in Wärme umgewandelt.

Damit der reale Vorgang dem idealen Fall möglichst nahekommt, sollen bevorzugt die technisch realisierten Kondensatoren einen messtechnisch erfassbaren (z.B. durch eine LCR-Messeinrichtung) hinreichend geringen Vor- oder Seriewiderstand aufweisen, der nicht im kOhm-Bereich oder darüber liegt, wenn die Messfrequenz im Bereich von einigen 100 Hertz bis in den höheren kHz-Bereich hinein reicht.

Die Kapazität der Kondensatoren soll möglichst nicht beliebige Werte annehmen, sondern ist so zu wählen, dass keine zusätzlichen, die Kommutierungskontakte darüber hinaus belastenden elektrischen Effekte auftreten.

Ist der ohmsche Widerstand der Motoren gering, kann es sich als vorteilhaft erweisen, zusätzliche Widerstände in Serie mit den einzelnen Kapazitäten zusammenzuschalten, um den Dämpfungswiderstand zu erhöhen.

Auch kann es sich als vorteilhaft erweisen, zusätzliche Induktivitäten ebenfalls in der Kombination mit den einzelnen Kondensatoren und eventuell mit Zusatzwiderständen zusammenzuschalten. Dabei bleibt die Anordnung der Kondensatoren wie beschrieben sternförmig, die Zusatzwiderstände und Zusatzinduktivitäten können in Serie zu den einzelnen Kondensatoren geschaltet werden.

Versuche haben insbesondere gezeigt, dass die Funkenunterdrückungseinrichtung in Abhängigkeit der motorspezifischen Eigenschaft, wie z.B. der Induktivität des Motors und der Anzahl der Teilwicklungen und das Frequenzverhalten der Zusatzbauelemente bestimmt werden muss. Daraus ergibt sich z.B. für hochinduktive Motoren (ca. 7 mH), dass größere Kapazitäten in Verbindung mit einem geringen Ersatzseriewiderstand der Kondensatoren besonders günstig sind.

Im folgenden werden Ausführungsbeispiele der vorliegenden Erfindung anhand einer Zeichnung näher erläutert. Es zeigen:
- Fig. 1: schematische Anordnungsdarstellung eines Elektromotors mit Funkenunterdrückungseinrichtung,
- Fig. 2: ein schematisches Ersatzschaltbild des Elektromotors aus Fig. 1,
- Fig. 3: den Kommutatorabschnitt einer Läuferwelle in einer perspektivischen Darstellung,
- Fig. 4: eine Trägerscheibe ohne diskrete Kondensatorelemente in einer Vorderansicht,
- Fig. 5: die Trägerscheibe aus Fig. 4 in einer Rückansicht,
- Fig. 6: die Trägerscheibe aus Fig. 4 im Vollschnitt,
- Fig. 7: eine zweite Ausführungsform einer Tragerscheibe ohne diskrete Kondensatorelemente in einer Vorderansicht,
- Fig. 8: die Trägerscheibe aus Fig. 7 im Vollschnitt,
- Fig. 9: die Trägerscheibe aus Fig. 7 in einer Rückansicht,
- Fig. 10: eine weitere Ausführungsform einer Trägerscheibe ohne diskrete Kondensatorelemente in einer Vorderansicht,
- Fig. 11: die Trägerscheibe aus Fig. 10 in einer Rückansicht und
- Fig. 12: die Trägerscheibe aus Fig. 10 im Vollschnitt.

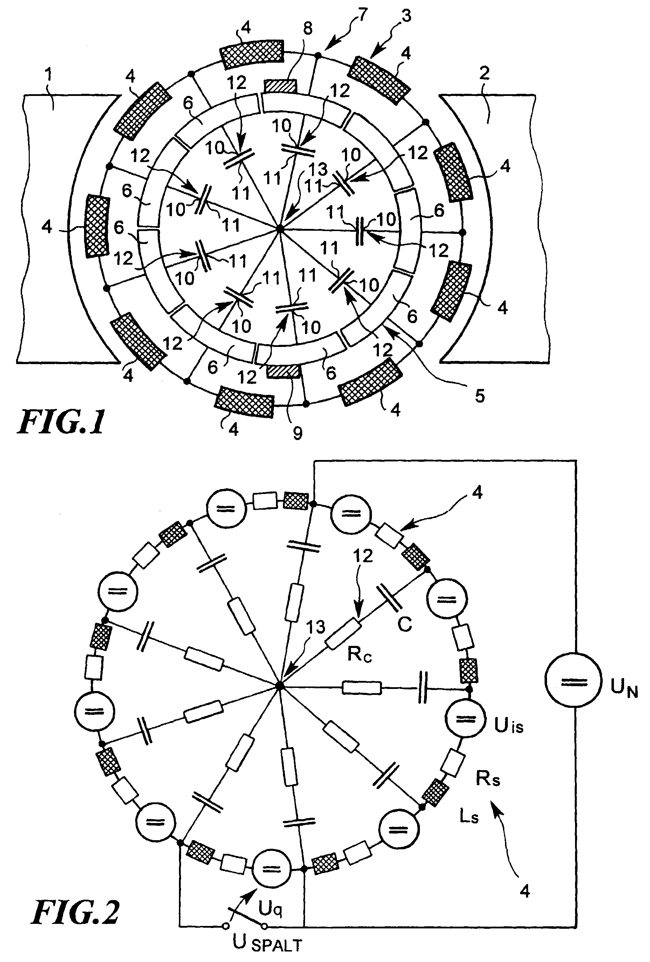

Beispielhaft soll die Erfindung anhand des in Fig. 1 dargestellten Schemas beschrieben werden. Bei dem in Fig. 1 dargestellten Schema handelt es sich um einen Glockenankermotor, wenn auch die beiden Pole 1 und 2 des Permanentmagneten außerhalb der Wicklungen dargestellt sind. Dies ist nur aus Vereinfachungsgründen und der Übersichtlichkeit halber geschehen. Der schematisch dargestellte Läufer 3 mit den unterschiedlichen Spulen 4, die gemeinsam das Wicklungssystem bilden, dreht sich in dem Magnetfeld der Permanentmagneten 1 und 2. Bei Glockenankermotoren oder eisenlosem Läufer befindet sich ein zylindrischer Permanentmagnet mit Süd- und Nordpol innerhalb der Läuferwicklung.

Der Läufer 3 umfasst eine Kommutatorhülse 5, die koaxial zur Läuferachse angeordnet ist und mit diesem umläuft. Die Kommutatorhülse 5 setzt sich zusammen aus zu einer Hülsenform gruppierten Kommutatorlamellen 6, die bei ihrer Gruppierung nicht unmittelbar elektrisch miteinander in Kontakt stehen, sondern jeweils eine Spule 4 dazwischengeschaltet ist. Das bedeutet, dass jede Kommutatorlamelle 6 mit jeweils einem Wicklungsende von zwei Spulen 4 elektrisch verbunden ist. Diese Verbindung ist durch die Bezugsziffer 7 schematisch dargestellt.

Auf den Außenumfang der Kommutatorhülse 5 drücken im Wesentlichen diametral zwei gegenüberliegende Bürsten 8 und 9 auf die durch die Kommutatorlamellen 6 gebildete Mantelfläche auf, Die Bürsten 8 und 9 bewirken zusammen mit der Kommutatorhülse 5 die entsprechende Umschaltung bzw. Kommutierung.

Jede Kommutatorlamelle 6 steht jeweils mit der ersten elektrischen Kontaktierungsseite 10 eines bipolaren Kondensators 12 in Verbindung. Die zweiten Kontaktierungsseiten 11 der Kondensatoren 12 sind in einem gemeinsamen Sternpunkt 13 zusammengeschaltet. Dies erfolgt bevorzugt ohne Zwischenschaltung weiterer Bauelemente. Im vorliegenden Beispiel ist die Anzahl der Spulen 4, der Kommutatorlamellen 6 sowie der Kondensatoren 12 identisch und beträgt 9. Andere Anzahlen können selbstverständlich verwirklicht werden.

In der Fig. 2 ist das elektrische Ersatzschaltbild dieser Anordnung dargestellt. neben der Kapazität B des Kondensators 12 ist auch dessen ohmscher Widerstand R_{C} eingezeichnet. Jede Spule 4 ist entsprechend aufgeteilt in die elektromagnetische Kapazität U_{IS}, den Wicklungswiderstand R_{S} und die Motorinduktivität L_{S}. Des Weiteren sind die Motorenspannung und die Kommutatorspannung schematisch eingezeichnet.

Aus dem Ersatzschaltbild ist zu erkennen, dass es eine Reihe von Einflussmöglichkeiten auf das System gibt, die entsprechend zur gewünschten Funkenunterdrückung veränderbar sind. So lässt sich nicht nur die Kapazität C sondern auch der Widerstand R_{C} der Kondensatoren 12 verändern. Gegebenenfalls kann dies durch Zwischenschaltung zusätzlicher Widerstände erfolgen. Gleiches gilt auch für die Motorwicklung. Sollte es erforderlich sein, so lässt sich auch in Reihe mit dem Kondensator 12 noch eine zusätzliche Induktivität zum Ausgleich zwischenschalten. Wichtig ist hier wiederum, dass die zweite Kontaktierungsseite 11 der Kondensatoren 12 in einem Sternpunkt 13 zusammengeführt ist.

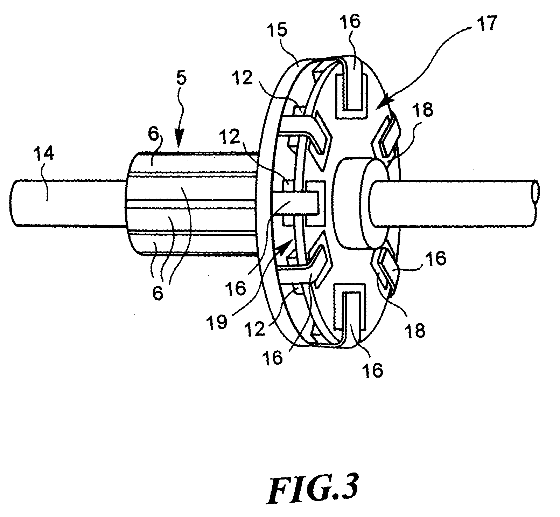

Anhand der Fig. 3 ist nunmehr schematisch ein für einen eisenlosen Läufer geeigneter Kommutatoraufbau näher beschrieben. Auf der Motorwelle 14 ist die Kommutatorhülse 5 angeordnet. Die einzelnen Lamellen 6 sind im Bereich einer Haltescheibe 15 sternförmig aufgefächert und die freien Enden 16 der Lamellen 5 sind so umgebogen, dass sie eine Trägerscheibe 17 hintergreifen. Die Trägerscheibe 17 besteht aus Leiterplattenmaterial und ist mit entsprechenden Anschlussflächen 18 zum Anlöten für die freien Enden 16 der Lamellen 6 versehen. Zwischen der Trägerscheibe 17 und der Haltescheibe 15 ist ein Spalt 19 gebildet, innerhalb dem die Kondensatoren 12 angeordnet sind. Die Anschlussflächen 18 durchdringen die Trägerscheibe 17 bzw. stehen mit entsprechenden Kontaktflächen auf der anderen Stirnseite der Kondensator 17 in Verbindung, auf denen die Kondensatoren entsprechend aufgesetzt sind. Eine kleine Haltescheibe 20, die ebenfalls auf die Motorwelle 14 aufgeschoben ist, positioniert und hält die Trägerscheibe 17.

Wie diese Kontaktierung der Kondensatoren 12 auf der Trägerscheibe 17 erfolgt, wird nunmehr anhand der folgenden Ausführungsbeispiele beschrieben.

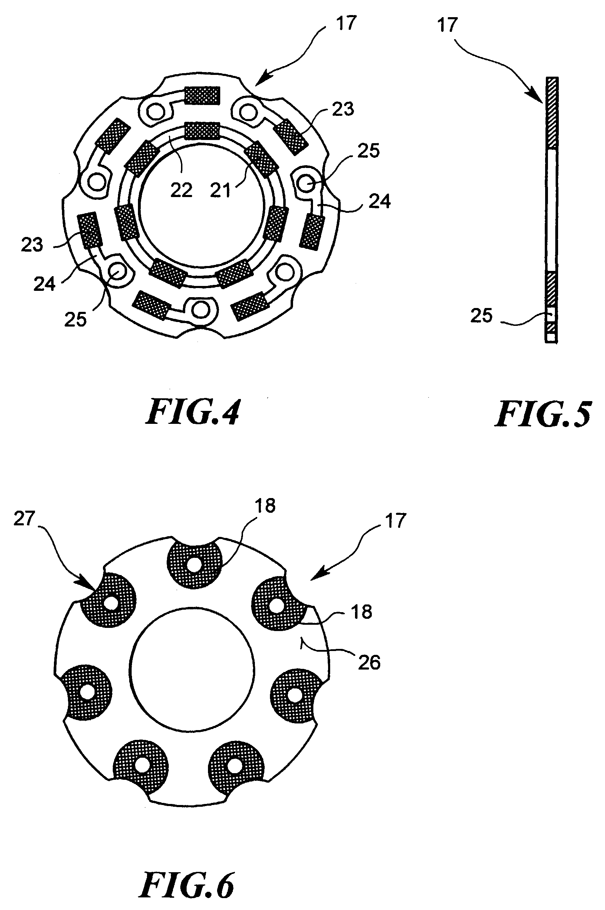

Die Trägerscheibe 17 ist gemäß der Ausführungsform der Fig. 4 bis 6 eine flache, im Wesentlichen zylindrische Scheibe aus einem Leiterplattenmaterial. Auf der Vorderseite sind Anschlussflächen 21 in der Nähe des Innenumfangs der Trägerscheibe 17 angeordnet, die alle über eine Ringverbindung 22 zum Erzeugen eines Anschlusskreises miteinander in elektrischer Verbindung stehen. Diese Ringverbindung 22 zusammen mit den Kontaktflächen 21 stellt im Wesentlichen den Sternpunkt 13 aus dem Ersatzschaltbild dar. Mit den Kontaktflächen 21 sind die zweiten Kontaktierungsseiten 11 der Kondensatoren 12 verbunden. Bei den Kondensatoren handelt es sich um diskrete SMD-Bauteile, die auf die Oberfläche des Leiterplattenmaterials aufgeklebt werden und dann mit den entsprechend zugeordneten Kontaktflächen, z.B. 21, verbunden werden. Die radial weiter außenliegenden Anschlussflächen 23 werden mit der ersten Kontaktierungsseite 10 der Kondensatoren 12 verbunden. Die Anschlussflächen 23 sind ebenfalls zu einem Anschlusskreis gruppiert; jedoch stehen sie nicht mittels einer Ringverbindung unmittelbar in elektrischem Kontakt zueinander, sondern sind durch die dazwischenliegenden Bereiche des Leiterplattenmaterials voneinander isoliert. Der koaxial zueinander angeordnete innere und äußere Anschlusskreis zusammen mit den radial angeordneten Kondensatoren 12 weist einen radförmigen Aufbau auf, wobei die Kondensatoren 12 die Speichen, der innere Anschlusskreis, die Nabe und der äußere Anschlusskreis die Lauffläche darstellen. Über entsprechend geführte Leiterbahnenabschnitte 24, die über Öffnungen 25 das Leiterplattenmaterial durchdringen, erfolgt eine elektrische Verbindung mit den Kontaktflächen 18 auf der Rückseite 26 der Trägerscheibe 17. Die auf der Rückseite annähernd kreisförmig ausgebildeten Kontaktflächen 18 werden dann mit den freien Enden der Kommutatorlamellen 6 verlötet. Die Einbuchtungen 27 erleichtern das Ausrichten der Trägerscheibe 17 und dienen zum platzsparenden Umgreifen der freien Endabschnitte 16 der Kollektorlamellen 6. Hierdurch müssen die freien Enden der Kollektorlamellen 6 nicht radial über die Trägerscheibe 17 überstehen.

Im folgenden werden weitere Ausführungsbeispiele von derartigen Trägerscheiben 17 näher beschrieben. Sofern gleiche und ähnliche Bezugsziffern verwendet werden, handelt es sich um Bauelemente mit gleicher und ähnlicher Funktion, so dass auf die vorangegangene Beschreibung verwiesen werden kann. Es soll im Folgenden nur auf die wesentlichen Unterschiede eingegangen werden.

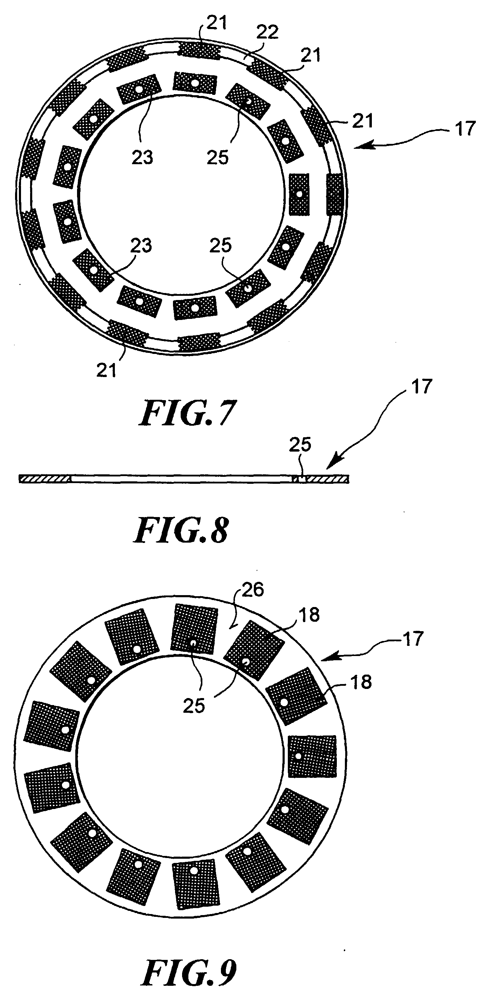

Bei der Ausführungsform gemäß der Fig. 7 bis 9 sind die Anschlussflächen 21 radial außen liegend angeordnet und über die Ringverbindung 22 miteinander verbunden, so dass der Sternpunkt 13 des Ersatzschaltbildes quasi umgekehrt außen angeordnet ist. Die Anschlussflächen 23 liegen dementsprechend radial weiter innen. Auch hier ist zu erkennen, dass die Anschlussflächen 21 und 23 zum Mittelpunkt der Trägerscheibe 17 im Wesentlichen auf einem Radius liegen. Die Öffnung 25 durchdringt im vorliegenden Fall exakt die Anschlussfläche 23 und sorgt für eine elektrische Verbindung mit der auf der Rückseite 26 angeordneten Kontaktflache 18, die wiederum mit den freien Enden 16 der Lamellen 6 kontaktiert wird.

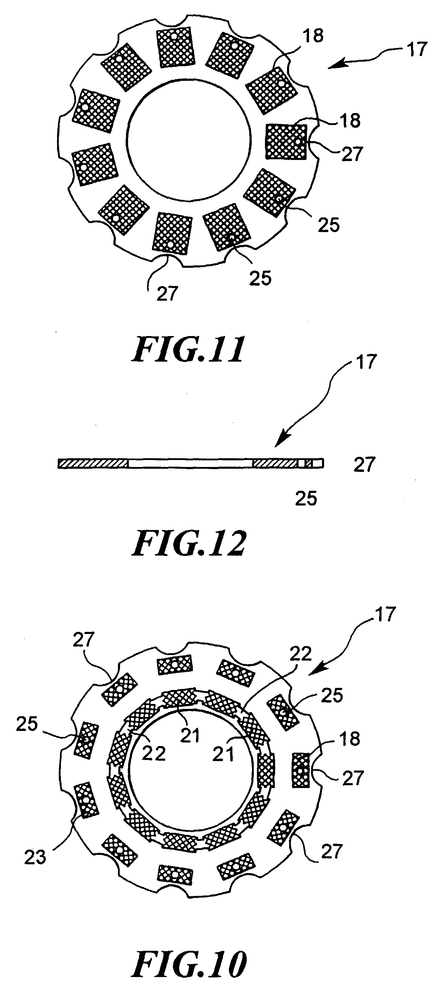

Bei der Ausführungsform gemäß der Fig. 10 bis 12 handelt es sich um eine Ausführungsform ähnlich der Fig. 4 bis 6. Jedoch durchdringt hier die Öffnung 25 auch unmittelbar die Anschlussfläche 23 und sorgt für eine Verbindung mit der Anschlussfläche 18 auf der Rückseite 26 der Trägerscheibe 17.

Aus den Ausführungsbeispielen ergibt sich, dass eine sehr enge Anordnung der Kondensatoren 12 auf der Trägerscheibe 17 möglich ist, da diese im Wesentlichen radial ausgerichtet sind. Durch die Zusammenschaltung der zweiten Kontaktierungsseite 11 in einem einzigen Sternpunkt 13 (hier über die Kontaktflächen 21 und die Ringverbindung 22) ist eine Schaltung erreicht, die eine hochwirksame Funkenunterdrückung im Kleinmotorenbereich bewirkt.

## Patentansprüche

1. Glockenankermotor mit einem Kommutator und einer Funkenunterdrückungseinrichtung aus mehreren, diskreten mit dem Kommutator elektrisch verbundenen Kondensatorelementen (12), die einen ersten Kontaktanschluss (10) und einen zweiten Kontaktanschluss (11) aufweisen, **dadurch gekennzeichnet,** dass der eine Kontaktanschluss (11) eines Kondensatorelements (12) mit jeweils einem der Kontaktanschlüsse (11) der anderen Kondensatorelemente (12) zu einem Sternpunkt (13) elektrisch zusammengeschaltet ist und der andere Kontaktanschluss (10) der Kondensatorelemente (12) jeweils mit einer zugeordneten Kommutatorlamelle (6) elektrisch verbunden ist, wobei die Funkenunterdrückungseinrichtung mindestens einen ersten Anschlusskreis und mindestens einen zweiten, im Wesentlichen koaxial zum ersten Anschlusskreis angeordneten Anschlusskreis mit größerem Durchmesser umfasst, der eine Anschlusskreis aus miteinander elektrisch zusammengeschalteten, den Sternpunkt bildenden Anschlussflächen und der andere Anschlusskreis aus elektrisch voneinander isolierten, mit einer zugeordneten Kommutatorlamelle (6) in elektrischer Verbindung stehenden Anschlussflächen (21) gebildet ist und sich die Kondensatorelemente (12) wie die Speichen eines Rades jeweils zwischen einer Anschlussfläche (21,23) des ersten Anschlusskreises und einer Anschlussfläche (21,23) des zweiten Anschlusskreises erstrecken und die Kontaktanschlüsse (10,11) mit der jeweils zugeordneten Anschlussfläche (21,23) elektrisch verbunden sind.

2. Glockenankermotor nach Anspruch 1, **dadurch gekennzeichnet,** dass der Sternpunkt (13) ausschließlich die einen Kontaktanschlüsse der Kondensatorelemente (12) elektrisch zusammenschaltet und keine weiter elektrische Verbindung vorhanden ist.

3. Glockenankermotor nach Anspruch 1 oder 2, **dadurch gekennzeichnet,** dass die Anzahl der Kondensatorelemten (12) größer als 3, bevorzugt größer als 5, beträgt.

4. Glockenankermotor nach einem der Ansprüche 1 bis 3, **dadurch gekennzeichnet,** dass die Kondensatorelemente (12) radial zum Mittelpunkt der beiden Anschlusskreise angeordnet sind.

5. Glockenankermotor nach einem der Ansprüche 1 bis 4, **dadurch gekennzeichnet,** dass die Kondensatorelemente (12) als blockförmige Chipkondensatoren, bevorzugt aus Keramik, ausgebildet sind.

6. Glockenankermotor nach einem der Ansprüche 1 bis 5, **dadurch gekennzeichnet,** dass der Widerstand der Kondensatorelemente (12) frequenzabhängig ist und mit steigender Frequenz abnimmt.

7. Glockenankermotor nach einem der Ansprüche 1 bis 6, **dadurch gekennzeichnet,** dass die zweiten elektrischen Kontaktanschlüsse (11) der Kondensatorelemente (12) jeweils unter Zwischenschaltung mindestens einer Motorwicklung (4) miteinander verbunden sind.

8. Glockenankermotor nach einem der Ansprüche 1 oder 7, **dadurch gekennzeichnet,** dass eine Trägerscheibe (17) vorgesehen ist, auf der mittels SMD-Technik die diskreten Kondensatorelemnte (12) aufgebracht sind.

9. Glockenankermotor nach einem der Ansprüche 1 bis 8, **dadurch gekennzeichnet,** dass die Trägerscheibe (12) aus Leiterplattenmaterial besteht, auf dem die Anschlusskreise und die Anschlussflächen (18;21,23) für die Kondensatorelemente (12) und/oder Kommutatorlamellen (6)angeordnet sind.

10. Glockenankermotor nach einem der Ansprüche 1 bis 9, **dadurch gekennzeichnet,** dass die Kondensatorelemente (12) bipolar nutzbare Kondensatoren mit Kapazitätswerten von 1 bis 1000 Nanofarad sind.

11. Glockenankermotor nach einem der Ansprüche 1 bis 10, **dadurch gekennzeichnet,** dass zusätzliche ohmsche Widerstände und/oder Induktivitäten mit den Kondensatorelementen (12) in Serie oder parallel geschaltet sind.
